# EUROPEAN PATENT SPECIFICATION

(11) **EP 3 948 214 B1**
(45) Date of publication and mention of the grant of the patent: **08.05.2024**
(21) Application number: 19716242.3
(22) Date of filing: 27.03.2019
(51) Int. Cl.: G01N 1/30, G01N 1/31, G01N 1/42, G01N 1/44

(54) **METHOD AND APPARATUS FOR PROCESSING BIOLOGICAL SPECIMENS**
VERFAHREN UND VORRICHTUNG ZUR BEHANDLUNG BIOLOGISCHER PROBEN
PROCEDE ET APPAREIL DE TRAITEMENT D'ECHANTILLONS BIOLOGIQUES

(43) Date of publication of application: 09.02.2022
(73) Proprietor: Diapath S.p.A., 24057 Martinengo (BG) (IT)
(72) Inventor: BATTISTEL, Alberto, 24057 Martinengo (BG) (IT); LUPO, Carmelo, 24057 Martinengo (BG) (IT); DANZI, Paolo, 24057 Martinengo (BG) (IT); BUSSI, Ottaviano, 24057 Martinengo (BG) (IT); MANENTI, Giorgio, 24057 Martinengo (BG) (IT); CASATTA, Nadia, 24057 Martinengo (BG) (IT); MELONE, Federica, 24057 Martinengo (BG) (IT)
(74) Representative: Trupiano, Federica
(86) International application number: PCT/IB2019/052479
(87) International publication number: WO 2020/194033

(56) References cited:
- CN-U- 205 665 076
- RU-C- 1 777 033
- US-A- 4 197 658
- US-A- 5 024 830
- US-A- 6 042 874
- US-A1- 2018 272 330
- Lp Kok ET AL: "Nonchemical dehydration of fixed tissue combining microwaves and vacuum.", Eur J Morphol. 1994 Mar;32(1), 1 April 1994 (1994-04-01), pages 86-94, XP055642885, Retrieved from the Internet: URL:http://www.ncbi.nlm.nih.gov/pubmed/808 6272 [retrieved on 2019-11-15]

## Description

### FIELD OF THE INVENTION

The present invention relates to the field of microscopy analysis of biological specimen, in particular to processing biological specimens in order to make them suitable for microscopy analysis.

### BACKGROUND OF THE ART

Microscopy analysis of biological specimen is frequently used to diagnose a wide array of pathologies.

In order to provide an accurate and complete diagnosis, the biological specimen under investigation has to be prepared accordingly through a multi-step process, that ca be called "workflow".

The workflow employs technologies and processes, now usually automated, directed towards the histopathological diagnosis. The diagnosis is possible only after the conclusion of the last stage of the process, i.e. the observation under the optical microscope.

The conventional workflow for solid biological specimen usually includes, in the specific order, the following steps:
I) fixation of the sample to be analyzed, for example with formalin;
II) dehydration and diaphanization (or clearing);
III) inclusion into paraffin;
IV) cutting of the paraffin block;
V) removal of paraffin and rehydration;
VI) staining;
VII) dehydration; and
VIII) slide mounting.

When an embedding medium different from paraffin is used, the workflow is essentially the same as the one described above.

The first step of the workflow consists of specimen "fixation". Fixing the specimen means keeping intact as much as possible the structural pattern of the tissue under study. In order to accomplish it, the specimen is immersed in a fixative, usually formalin, which can minimize the degradation caused by the removal of the sample from its vital environment and by microorganisms feeding on the biological material. Once properly fixed, the tissues maintain their structure intact for years.

The specimen is then solidified by replacing the water contained in it with paraffin. Since paraffin is water-insoluble, the specimens must be dehydrated in order to allow the penetration of paraffin in it. This is usually carried out by immersing the specimen into ethyl alcohol, or other reagents that may form H-bond with water, at increasing concentrations. This is called dehydration step. Reagents used in this step, such as ethyl alcohol, do not cause deterioration of the tissue and are both water-soluble and miscible with a solvent for paraffin.

Reagents used in the dehydration step, e.g. ethyl alcohol, do not solubilize paraffin, however they are miscible to solvents that do solubilize paraffin. Therefore, it is necessary to replace the reagent permeated into the tissue, e.g. ethyl alcohol, with a solvent for paraffin, usually xylene or isoparaffin-based solvent, thus obtaining a clear and translucent specimen. This is commonly called diaphanization or clearing step. Once diaphanization or clearing step is carried out, the specimen is left for a suitable time in liquid paraffin, with the aim of deeply infiltrate the tissue, so that it results embedded in a solid medium that allows its cutting (i.e. sectioning). After paraffin permeation, the specimen is placed into a disposable metal or plastic embedding mold and filled up with fused paraffin. Later the embedding mold is placed to solidify on a cold plate. When the paraffin has solidified, the mold is removed obtaining a paraffin block containing the specimen close to the intended cutting surface.

The steps providing the biological specimen included into paraffin are usually called "processing". Therefore, processing usually include fixation with a fixative, e.g. formalin; dehydration and diaphanization (or clearing); and inclusion into paraffin. Conventional processing is usually the most time- and reagent-consuming phase of the workflow. For example, conventional processing lasts for about 20 hours (see Table 1 above).

**Table 1**

| STEP | REAGENT | TIME |
|---|---|---|
| 1 - Fixation | Fixative (e.g. formalin) | 6h |
| 2 - Dehydration | Water | 10 min |
| 3 - Dehydration | Alcohol 70 | 1.5 h |
| 4 - Dehydration | Alcohol 95 | 1.5 h |
| 5 - Dehydration | Alcohol 99 | 1.5 h |
| 6 - Dehydration | Alcohol 99 | 2 h |
| 7 - Diaphanization | Xylene | 1.5 h |
| 8 - Diaphanization | Xylene | 2 h |
| 9 - Inclusion | Paraffin | 1.5 h |
| 10 - Inclusion | Paraffin | 1.5 h |
| 11 - Inclusion | Paraffin | 1.5 h |

The steps of Table 1 above require fixed times, whether they are carried out manually or automatically. Currently, respecting treatment times is of fundamental importance for the formulation of the diagnosis and the reproducibility of the results.

From the workflow reported above, it is evident that specimens have to be treated with several solvents to allow permeation of useful agents, such as paraffin, in them. Automatic processors are instrument able to carry out automatically the entire processing protocol described above, from fixation to paraffin permeation.

In first-generation automatic processors, specimens arranged in bio-cassettes are automatically immersed in various tanks containing the reagents for processing for an appropriate time set in a protocol. The tanks are arranged in the established order, linearly or "carousel"-type (i.e. arranged in circle). The main drawback of this type of instrument lies in the structure of the device: every time the bio-cassettes are moved from one tank to another, the system causes a potential chemical risk, exposing the operator to solvent vapors generated within the stations. Although this type of processors has been equipped with a panel in an attempt to isolate the operator from the vapors of reagents, they actually do not guarantee complete isolation from the released vapors.

Modern automatic processors are equipped with tanks containing the reagents for processing and a thermo-controlled and pneumo-controlled processing chamber. Such processors, managed by a software able to run different protocols according to the characteristics of the sample to be processed, is able to let the different reagents flow from the tanks to the processing chamber, allowing bio-cassettes to remain in the processing chamber for the whole processing time and not to move them through the different tanks, contrary to first-generation automatic processors. These processors allow also washing the processing chamber and the loading/unloading tubes. The operator is responsible for the maintenance of the modern processor, and his/her tasks may be, for example:
- loading the bio-cassettes in the processing chamber;
- choosing and start the appropriate protocol;
- removing the bio-cassettes from the processing chamber at the end of the cycle;
- starting a washing protocol and, once finished, check for any error messages;
- checking the reagent levels within the tanks daily and changing them periodically; and
- disposing of the reagents according to the rules for the disposal of toxic waste.

Modern processors possess various drawbacks. For example, whenever a reagent is moved from the processing chamber to the dedicated tank and vice versa (loading and unloading of the reagent), there is a potential risk of failure of the instrument. Since a modern processor may utilize about 12 reagent tanks, there are 24 events of potential failure. Each different event can cause a different artifact defect in the tissue, leading to the permanent loss of diagnostic information. For example, if the process is interrupted during fixative loading, the processing chamber (and specimen) will remain dry, leading to decomposition of the specimen. The missing fixation will completely prevent diagnosis. In another example, if the process is interrupted during the unloading of the alcohol, an over dehydration of the tissue shall occur. Moreover, modern processors are cost consuming, as they require large amount of reagents. A modern processor usually needs 12 reagent tanks of about 5 liters each, requiring the purchase of about 55 liters of various processing reagents. Moreover, after some cycle of processing, the reagents will be cross-contaminated and have to be exhausted, so there is also an indirect cost arising from the disposal of about 55 liters of waste. In this scenario, it becomes obvious that the disposal of the large amount of reagents has an important environmental impact, as well as a detrimental effect for the health of operators.

US 4 197 658 A discloses a freeze dryer for tissue specimens impregnated with paraffin or resin.

US 5 024 830 A discloses an apparatus for the cryopreparation of biological tissue samples.

CN 205 665 076 U describes a pathological tissue processor including a formaldehyde storage tube.

RU 1 777 033 C discloses a device for treating biological material comprising a container filled with paraformaldehyde.

Kok LP, Boon ME. Nonchemical dehydration of fixed tissue combining microwaves and vacuum. Eur J Morphol. 1994 Mar;32(1):86-94 discloses a histoprocessing method for paraffin and plastic sections in which dehydration of fixed tissue blocks is achieved by microwaving under vacuum.

There is the essential need to provide a processing method and processors that overcome the drawbacks reported above. For example, there is the essential need to make quicker and easier the entire processing and the steps comprised therein, and to reduce at the same time the use of solvents and materials necessary for the specimen preparation.

### SUMMARY OF THE INVENTION

An object of the present invention is to provide a method for processing a biological specimen that overcomes the drawbacks associated to the conventional processing methods reported above, allowing an overall reduction of the costs of the diagnosis. The method of the present invention is defined in claim 1 and its dependent claims.

Another object of the present invention is to provide an apparatus able to carry out the methods mentioned above as defined in claim 7 and its dependent claims.

As used herein, "processing" refers to the multi-step process that provides the biological specimen fixed, dehydrated and included into paraffin. Such processing, conventionally, can include fixation with formalin; dehydration and diaphanization (or clearing); and inclusion into an embedding medium, such as paraffin.

As used herein, "fixing" means the process of treating a biological specimen in order to preserve it from decay. Such fixing may involve permeating a chemical (i.e. a fixative) in a biological specimen whereby its structures are preserved in a state (both chemically and structurally) as close as possible to the one of the living tissue. Suitable fixatives can be the ones known in the art, e.g. formalin, Carnoy liquid, methacarn, Bouin liquid and fixative B5.

As defined herein, "dehydrating" refers to the step(s) of removing extractable water that is contained in (fixed) biological specimens as defined above. The water removed according to the method of the invention is the water that conventionally is replaced by hydroalcoholic mixture by immerging the specimen in such hydroalcoholic mixtures at increased concentration, e.g. as represented in Table 1 above, steps 2 to 6. As used herein, "biological specimen" is an isolated sample of a tissue of animal origin, preferably of human origin. Illustrative biological specimens are solid biopsies. Solid biological specimen are preferred according to the invention.

The biological specimen is treated with vapors of a fixative, preferably with vapors of formaldehyde, whereby such vapors permeate/penetrate the biological specimen and formation of cross-linkages between adjacent polypeptide chains occurs, thus fixing the biological specimen and providing a fixed biological specimen. It was surprisingly found out that fixative vapors, in particular formaldehyde vapors, lend excellent fixing in such biological specimen, providing several advantages discussed below.

As used herein, "fixative vapors" are vapors comprising the fixing components of one or more fixatives in their gaseous form. The fixative can be for example selected from formalin, Carnoy liquid, methacarn, Bouin liquid, fixative B5, and mixtures thereof. Always according to the present invention, any formalin analogous compound, for example (not limiting) glyoxal. The fixative vapors are preferably formaldehyde vapors; formaldehyde is the fixing component of formalin. As used herein, "formaldehyde vapors" are vapors comprising formaldehyde in its gaseous form. The treatment of step a') according to the method of the invention can be carried out contacting fixative vapors, preferably formaldehyde vapors, with the biological specimen, advantageously without pre-treating such biological specimen. This allows penetration of fixative vapors, e.g. formaldehyde vapors, within the biological specimen, whereby cross-linkages between adjacent polypeptide chains of the biological specimen can be formed. For example, such contacting can be carried out advantageously saturating a chamber containing the biological specimen, e.g. a processing chamber, with the formaldehyde vapors, whereby the formaldehyde vapors can penetrate the biological specimen.

Carrying out step a') is advantageous to further improve time- and costs-savings of the method of the invention.

According to the method of the invention, essential step a), i.e. dehydration step, provide for physical removal of the water from the fixed biological specimen by evaporation and/or sublimation.

As used herein, "physical removal" refers to the removal of the water defined above by physical means, i.e. by evaporating and/or sublimating such water. This term can be used herein as opposed to the term "chemical removal", i.e. the conventional removal carried out by immerging the specimen in hydroalcoholic mixtures at increased concentration (the "alcoholic scale") wherein the water contained in the biological specimen is replaced by other solvents.

The method of the invention thus comprises removal of water from the biological specimen by evaporating and/or sublimating it, providing a dehydrated biological specimen, i.e. a biological specimen that is essentially free of extractable water, whereby it can be later enclosed in an embedding medium.

The method of the invention comprises the following step b): including the fixed and dehydrated biological specimen into an embedding medium, preferably, paraffin. Step b) provides a processed biological specimen.

The method of the invention provides several advantages over the conventional workflow in the same technical field.

For instance, treating biological specimens with formaldehyde vapors according to embodiments of the method of the invention allows reducing the volume of fixative while maintaining the same fixing performances as the conventional fixing methods. Indeed, conventional fixing methods employ diluted solutions of formalin as fixative or vapors thereof. Formalin is a solution comprising water saturated with formaldehyde and other component(s); in particular, formalin comprises about 40% v/v formaldehyde in water and about 10-20% stabilizer, such as methanol (added to suppress oxidation and polymerization of formaldehyde). The most employed formalin solution in conventional fixing methods is labeled "10% buffered formalin", which is a 10% aqueous solution of 40% v/v formaldehyde in water, hence it comprises 4% of formaldehyde in water. Therefore, instead of using large volumes of 4% formaldehyde in water as in conventional fixing methods, the method for fixing of the invention can employ vapors of formaldehyde, which comprise far more than 4% of formaldehyde, and the same result (i.e. a fixed biological specimen) can be obtained by using smaller volumes of fixative.

Moreover, for the same reason stated above (i.e. using a more concentrated source of fixative with respect to the 10% buffered formalin), it is possible to reduce the dimensions of the processing chamber comprised in the apparatus wherein the fixation is carried out. Indeed, while carrying out the method for fixing of the invention, a processing chamber having a smaller volume is required to contain the same amount of fixative compared to conventional fixing methods. Accordingly, step a') of the present method can be advantageously carried out in a processing chamber containing such biological specimen. This provides contacting the biological specimen with the formaldehyde vapors inside such processing chamber, whereby the biological specimen is effectively fixed. Preferably, the processing chamber is air-tight and is saturated with such formaldehyde vapors, or in general with fixative vapors, allowing an effective fixation (e.g. time-wise) of the biological specimen.

Furthermore, according to the method of the invention, the removal of water from the biological specimen by evaporation (step a)) is less time-consuming compared to the conventional dehydration method. As explained above, the latter involves the permeation of alcohol in the tissue, due to the lack of affinity between paraffin and water, requiring a time of about 6.5 hours (see Table 1 above). Step a) for dehydrating according to the method of the invention is instead shorter to be carried out effectively.

Moreover, the subsequent permeation with xylene (diaphanization) is avoided when the method of the invention is carried out, allowing saving further time and reagents. Indeed, the conventional step of diaphanization described above (that lasts about 3.5 hours - see Table 1 above) is carried out because paraffin is not soluble in alcohol; therefore, conventionally, alcohol 99% has to be replaced by xylene, which can dissolve paraffin. The method of the invention, once carried out, provides a biological specimen that is essentially free of any liquid (such as water, ethanol or xylene). Accordingly, inclusion in the embedding medium, e.g. paraffin, can be carried out directly after the step a), i.e. the dehydration step. This advantage holds true also in the embodiments wherein step a') is optional and may not be carried out.

Additionally, according to the method of the invention, less solvents and plastics are required compared to conventional dehydrating method: the lack of the "alcoholic scale" (see steps 2 to 6 of Table 1 above) results in a significant solvent-savings and in less packaging to be managed and disposed. The method of the invention is thus more environmental friendly with respect to the conventional dehydration method. This advantage holds true also in the embodiments wherein step a') is optional and may not be carried out.

Therefore, according to the above, the method of the invention is more environmentally friendly and allows saving times, solvents and thus costs with respect to the conventional workflow.

The method of the invention provides every advantages above disclosed, as well as other advantages.

The International Organization for Standardization (ISO) recommends the handling, documentation, storage and processing of formalin-fixed and paraffin-embedded (FFPE) tissue specimens. FFPE tissues have been created and archived by pathologists for decades so that the results provided by the methodology are recognized and standardized. A further advantage of the method of the invention, when the specimen is formaldehyde-fixed and step b) is carried out with paraffin as embedding medium, is preserving fixation under formaldehyde and the infiltration/inclusion with paraffin according to ISO recommendations, redesigning the execution of the process as disclosed above.

Steps a') and a) can be carried out in sequence in the same processing chamber, further saving time and costs. According to embodiments, steps a') and a) could be carried out simultaneously.

According to embodiments, formaldehyde vapors are preferably moist formaldehyde vapors.

As used herein, "moist formaldehyde vapors" means vapors comprising formaldehyde and water, with formaldehyde being in a greater amount than water, and/or methanediol, which is a product of the hydration of formaldehyde.

Although formaldehyde is in gas state at room temperature and ambient pressure and it is possible to use it as such according to the method of the invention, moist formaldehyde vapors are preferred due to security reasons. Indeed, dry formaldehyde vapors, i.e. vapors essentially consisting of formaldehyde, may cause explosions when exposed to heat.

Moist formaldehyde vapors can be advantageously generated by heating, and/or creating vacuum within a chamber containing, a concentrated formaldehyde solution and/or a mixture of formaldehyde derivatives and water.

A concentrated formaldehyde solution that can be heated to generate moist formaldehyde vapors useful in the present method is a solution comprising an amount of 10 to 40% w/v of formaldehyde in water.

Starting products useful to generate formaldehyde vapors can also be formaldehyde derivatives, such as paraformaldehyde or trioxane, both of which are known chemical compound and commercially available, or mixtures thereof. According to the present invention, paraformaldehyde may have a degree of polymerization of 8 to 100 units.

The heating of a concentrated formaldehyde solution and/or a mixture of formaldehyde derivatives and water to generate moist formaldehyde vapors can be carried out at a temperature comprised in the range from 20 to 100 °C, preferably from 40 to 90 °C, more preferably from 60 to 80 °C.

Moist formaldehyde vapors can also be generated by mixing formaldehyde vapors (e.g. dry formaldehyde vapors) with water vapors (e.g. from water heated to its boiling point, preferably at reduced pressure). Preferably, predetermined amounts of formaldehyde vapors are mixed with water vapors desired to form moist formaldehyde vapors as defined above.

According to embodiments, fixative vapors, such as formaldehyde vapors, can be cold or warm, and are preferably warm, as they provide a more efficient fixation (e.g. time-wise). Step a') of treating with warm fixative vapors has to be carried out so that the temperature of the fixative vapors, such as moist formaldehyde vapors, does not "cook" the biological specimen, i.e. they do not compromise the characteristics of the biological specimen evaluated by microscope analysis. In other words, fixative vapors have a temperature that does not compromise the macroscopic and microscopic structural features of the tissue. For example, the step of treating can be advantageously carried out at a temperature comprised in the range of 25 to 50 °C, and preferably from 30 to 45 °C.

Step a') of treating the biological specimen with fixative vapors, in particular with formaldehyde vapors, is carried out preferably for a time up to 6 hours, preferably comprised in the range of 1 to 6 hours, for example 4 hours. It has been found that contacting fixative vapors such as formaldehyde vapors with a biological specimen of a suitable size for the time disclosed above according to the method of the invention provides good fixation of the biological specimen.

In preferred embodiments, the evaporation of step a) is carried out by air-drying and/or by vacuum drying the biological specimen; more preferably by a sequential or simultaneous combination of air-drying and vacuum drying.

As used herein, "air-drying" refers to physically removing water from the biological specimen by means of a ventilated and/or heated environment. For example, the air-drying can be carried out in a fan-assisted oven.

As used herein, "vacuum drying" refers to removing water from the biological specimen at reduced pressure. Such reduced pressure can provide for a slight vacuum, e.g. comprised from 900 to 700 mbar, or can provide for a greater vacuum, e.g. up to 10 mbar.

The conditions (such as time, temperature, vacuum, relative humidity, etc.) of the steps of the method of the invention should be tuned in order not to compromise the macroscopic and microscopic structural features of the tissue.

Advantageously, step a) of the method of the invention can be carried out in a processing chamber containing the biological specimen. Such processing chamber is therefore set to be able to physically remove the water from the fixed biological specimen by evaporation and can thus comprise means for physically removing water contained in said fixed biological specimen by evaporation.

For example, such processing chamber can be set as a fan-assisted oven.

Accordingly, such processing chamber has advantageously at least an outlet for a flow of fluid, whereby the water physically removed from the biological specimen can be unloaded from the processing chamber through such outlet, e.g. in vapor form. Such outlet thus allows the mass transport of water away from the biological specimen and from the processing chamber, i.e. from where the dehydration advantageously occurs. Advantageously, the processing chamber wherein step a) can be carried out can be the same processing chamber wherein step a') is carried out.

As step b) is carried out, the method of the invention can be advantageously carried out without the diaphanization step as disclosed above. Indeed, after the dehydration step according to step a), the biological specimen is dehydrated enough to allow the penetration of the embedding medium.

Step b) can be carried out by contacting, e.g. immerging, the fixed and dehydrated biological specimen in the embedding medium, or by covering the fixed and dehydrated biological specimen with the embedding medium. For instance, when the embedding medium is paraffin, step b) can be carried out as follows: once the biological specimen is fixed according to step a'), if present, or according to other fixing methods, and dehydrated according to step a) of the invention, the biological specimen(s) (that can be set in bio-cassettes) is automatically or manually displaced into an embedding chamber, which is different from the processing chamber, where the infiltration with molten paraffin will take place by filling at least partly the embedding chamber containing the biological specimen with such molten paraffin.

Finally, solidifying the molten paraffin (e.g. by leaving it at room temperature) provides the processed biological specimen.

Preferably, inclusion of biological specimen into an embedding medium of step b) is carried out with the aid of vacuum and pressure cycles to provide a more effective embedding.

Advantageously, the embedding chamber may not need cleaning cycles to remove the residual reagents, because only paraffin will be loaded in.

Further subject-matter of the present application is an apparatus for processing a biological specimen as defined in claim 7.

The apparatus of the invention is advantageously set to carry out at least steps a) and b) of the method of the invention as above disclosed, and thus provides every advantage of the method of the invention.

The apparatus of the invention allows dehydrating a fixed biological specimen and then including it in the embedding medium, thereby providing a processed biological specimen. For instance, a fixed biological specimen can be dehydrated in the processing chamber of the apparatus of the invention as disclosed in step a) above. The fixed and dehydrated biological specimen can then be automatically or manually displaced in the embedding chamber, wherein inclusion of the fixed and dehydrated biological specimen into an embedding medium according to step b) as above disclosed can be carried out. In order to carry out step b) as above disclosed in any of its embodiment, the apparatus of the invention can comprise also means for providing vacuum and/or pressure where the inclusion of biological specimen into the embedding medium occurs, e.g. within the embedding chamber. Preferably, such embedding medium is paraffin.

According to embodiments, the inclusion of the biological specimen in the embedding medium is carried out in the processing chamber; thus, the embedding chamber is optional and may not be comprised in the apparatus of the invention.

The apparatus of the invention provides several advantages. For example, the apparatus of the invention does not need several loading and unloading stages of reagents, as conventional automatic processors do. Indeed, the apparatus of the invention is able to carry out the dehydration according to the method of the invention defined above (step a)), which does not involve immerging the biological specimen in increasing alcohol concentration, and the inclusion in the embedding medium requires only one reagent, namely the embedding medium, which can be loaded/unloaded once. For the same reason, the potential risks of failure involved in the loading/unloading stages of conventional automatic processors does not occur in the apparatus of the invention. Also for the same reasons, the apparatus of the invention does not need to be coupled with several reagent tanks to carry out conventional dehydration by means of the "alcoholic scale". Indeed, the apparatus of the invention requires only an embedding medium and optionally fixative vapors precursors to provide a processed biological specimen. Instead, conventional processors need about twelve tanks containing each different reagents to carry out processing. Accordingly, the apparatus of the invention can be advantageously coupled exclusively with few tanks, for example two or less tanks, preferably one, which contains the embedding medium, as the fixative vapors, e.g. the formaldehyde vapors, can be provided by cartridges as above disclosed.

Moreover, the apparatus of the invention allows reducing the amount of reagents used, in particular the reagents used in conventional processing (e.g. the ones reported in Table 1 above), with respect to the conventional processors.

Cleaning the chambers of the apparatus of the invention may not be required or is greatly reduced. Indeed, the processing chamber can be loaded with only one reagent, i.e. the embedding medium, whereby such a chamber does not require cleaning, or cleaning is greatly reduced, as cross-contamination of reagents cannot occur. The above also applies for the embedding chamber, when present. Accordingly, the amount of reagents used for cleaning the apparatus of the invention is reduced too with respect to the conventional processors.

As used herein, "means for physically removing water" are means that allow evaporation of water contained in the biological specimen. Such evaporation is meant to occur in the processing chamber; accordingly, these means are set to provide evaporation of water contained in the biological specimen inside the processing chamber. For example, means for physically removing water are means that allow air-drying and/or vacuum drying of the biological specimen. In particular, means for physically removing water can be a heater and fans, whereby the processing chamber is set as a fan-assisted oven and physical removal of water is obtained by air-drying as disclosed above, and/or vacuum pump(s). Therefore, according to embodiments of the apparatus of the invention, the means for physically removing water are means for carrying out air-drying and/or vacuum drying.

As used herein, "means for loading and unloading an embedding medium" are means that allow loading and unloading of an embedding medium, e.g. paraffin, into the processing chambers and/or the embedding chamber, when present (wherever the inclusion in the embedding medium is carried out). Such means may be pumps and/or tubes and/or heaters to melt the embedding medium (if it is solid at room temperature), so that it can flow into the processing chamber and/or into the embedding chamber once the dehydration step is over and, vice versa, from the processing chamber and/or from the embedding chamber once the inclusion in the embedding medium is over. According to embodiments, a container containing the embedding medium can be in fluidic connection to the processing chamber and/or the embedding chamber (wherever the inclusion in the embedding medium is carried out), so that the embedding medium can be loaded to and unloaded from the processing chamber and/or the embedding chamber. An exhaust container for the embedding medium in fluidic connection with the processing chamber and/or the embedding chamber (wherever the embedding step occurs) can also be present.

The apparatus of the invention further comprises a first chamber for generating fixative vapors, e.g. formaldehyde vapors, such first chamber being in fluidic connection to the processing chamber, and means for generating a flow of fixative vapors from such first chamber to such processing chamber. Accordingly, the apparatus of the invention can further comprise fixative vapors, such as formaldehyde vapors, and can be arranged to do so. The first chamber contains fixative vapor precursors, for example formaldehyde vapor precursors, such as a concentrated formaldehyde solution and/or a mixture of formaldehyde as described above, from which fixative vapors, such as formaldehyde vapors, can be generated. According to the above, fixative vapors are generated by the means for generating a flow of fixative vapors starting from fixative vapor precursors, such as formaldehyde vapors precursors. embodiments allow carrying out steps a'), a) and b) of the method of the invention and provide every advantage thereof.

As used herein, "fixative vapor precursors" are compounds or mixture of compounds that can generate fixative vapors as defined above. The generation of fixative vapors from fixative vapor precursors can be carried out by means for generating a flow of fixative vapors as described below. Such compounds or mixture of compounds can be in their solid, liquid or gaseous state. As used herein, "formaldehyde vapor precursors" refer to one or more compounds that are able to generate formaldehyde vapors as defined above. For example, formaldehyde vapor precursors can be a concentrated formaldehyde solution or a mixture of formaldehyde derivatives as defined above. When a concentrated formaldehyde solution or a mixture of formaldehyde derivatives are heated, formaldehyde vapors as defined above are generated.

As used herein, "means for generating a flow of fixative vapors" are one or more means that are able to generate fixative vapors, preferably formaldehyde vapors, more preferably moist (for example as above described), and/or generate a flow of such vapors, whereby they flow from the first chamber to the processing chamber. Such means may generate a flow of fixative vapors starting from fixative vapor precursors. Such means may be, for example, a heater comprised in the first chamber, which allows heating of e.g. a solution of formaldehyde derivatives (formaldehyde vapor precursors) contained in the first chamber. Such heating provides generating fixative vapors such as formaldehyde vapors inside the first chamber, which is in fluidic connection with the processing chamber. As fixative vapors are gaseous, they diffuse from the first chamber to the processing chamber through the fluidic connection. The processing chamber is meant to contain the biological specimen, thus the fixative vapors generated within the first chamber and flowed to the processing chamber can fix the biological specimen as described above according to embodiments of the method of the invention. Means for generating a flow of fixative vapors such as formaldehyde vapors can also comprise means for generating a (slight) vacuum in the processing chamber, whereby the fixative vapors flows more efficiently from the first chamber to the processing chambers. Fans can also be used for the same purpose. According to embodiments of the apparatus of the invention, the processing chamber is preferably saturated with fixative vapors such as formaldehyde vapors, thus optimizing the fixation provided by the apparatus. To keep the processing chamber saturated with vapors, the apparatus can comprise a pressure switch so that it can operate as soon as a change in pressure occurs.

According to embodiments of the apparatus of the invention, the processing chamber is preferably air-tight. This ensures efficient containing of fixative vapors such as formaldehyde vapors in the processing chamber for the desired time to fixate the biological specimen.

Advantageously, the apparatus of the invention, in particular the first chamber, can be coupled with fixative cartridges containing fixative vapors precursors, such as formaldehyde vapor precursors. Such cartridges would only be activated inside the instrument by a plug. This avoids handling of reagent tanks containing harmful fixatives (e.g. formaldehyde/formalin) by operators, eliminating the exposure risk that conventionally occurs in modern automated processors and increasing the safety of operators. Accordingly, once the fixative vapors such as the formaldehyde vapors permeate inside the processing chambers, the exhausted fixative cartridge can be ejected from the apparatus in a safe manner, e.g. inside a sealed container/bag, exploiting a packaging system that can be comprised in the apparatus of the invention as well. In this way, operators are never exposed to harmful fixatives such as formaldehyde, the latter being a known toxic chemical, when using the apparatus of the invention. Indeed, with conventional processors, in particular with the modern ones, operators remove the exhausted reagents from the instrument tanks and pour them into containers dedicated to disposal, or alternatively the harmful fixative (e.g. formalin) is exhausted directly from the conventional processors into containers dedicated to disposal, which are often open; both cases represent a great risk of exposure to e.g. formalin/formaldehyde for the operators. The apparatus of the invention averts exposure of operators to reagent vapors, as the only harmful reagent that will be used (such as formaldehyde vapor precursors) is preferably contained within the cartridge as herein disclosed; advantageously, such cartridge can only be activated inside the apparatus of the invention.

According to embodiments of the apparatus of the invention, the processing chamber comprises at least an outlet for a flow of fluids, whereby the water physically removed from the fixed biological specimen during dehydration is unloaded from the processing chamber through the outlet. Such outlet allows mass transfer of water, i.e. unload of the water (physically removed from the biological specimen) from the processing chamber, keeping the processing chamber essentially free of water and/or water vapors and thus improving the dehydration efficiency. The apparatus of the invention may advantageously further comprise means that favors the unloading of such water (physically removed from the biological specimen) from the processing chamber, e.g. a cold trap or fans to generate an outgoing flow of fluid (e.g. water vapors) from the processing chamber. The apparatus of the invention may also comprise a second chamber in fluidic connection with such outlet for a flow of fluids, wherein the exhaust water (physically removed from the biological specimen) exiting from the processing chamber is contained.

In a preferred embodiment, the apparatus can be configured to be coupled with the cartridge as defined below. Preferably, the apparatus and the cartridge of the invention are configured so that, when coupled, the content of the cartridge of the invention, e.g. the formaldehyde vapor precursors, does not leak in the external environment. Such cartridge (not according to the present invention) contains fixative vapor precursors such as formaldehyde vapor precursors as above defined and is air-tight, so that it able to isolate such fixative vapor precursors from the outside environment, whereby the operator that has to handle the cartridge is not exposed to fixative vapors.

The cartridge is also configured so that, when coupled with the apparatus of the invention, it can release the fixative vapor precursors, (preferably formaldehyde vapor precursors) contained therein within a chamber that is comprised in the apparatus of the invention, for example within the first chamber as disclosed above. Accordingly, the cartridge of the invention can be "activated" (namely, can release the fixative vapor precursors) once coupled with the apparatus of the invention by means of a plug.

The cartridge provides various advantages. For example, contrary to conventional processing and processors, handling of reagent tanks is avoided, eliminating the exposure risk for the operators. It also provides an innovative procedure able to obtain same fixation results while decreasing the amount of reagents used.

The cartridge, as well as the apparatus of the invention, can also be set so that the exhausted cartridge, i.e. the cartridge after the fixative vapor precursors contained therein are released, can be ejected from the apparatus of the invention in a safe manner, i.e. without exposing the operators to fixative vapors and/or the fixative vapor precursors. For example, the cartridge can be ejected inside a sealed container or bag.

### BRIEF DESCRIPTION OF THE FIGURE

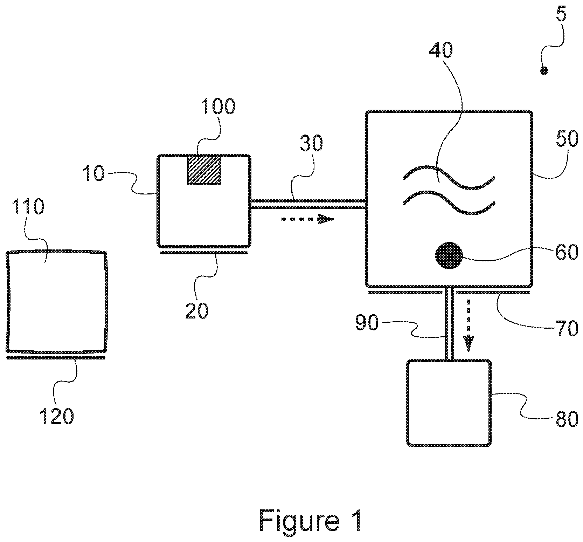

Figure 1 represents an embodiment of the apparatus of the invention, wherein:
5. Apparatus
10. Fixative vaporizing chamber (first chamber)
20. Heating element (means for generating a flow of fixative vapors)
30. Fixative vapours connection piping
40. Fixative vapors
50. Processing chamber
60. Biological specimen
70. Heating element (means for removing water)
80. Condenser and/or exhausted water container (second chamber)
90. Exhausted water connection piping
100. Fixative vapours precursor cartridge
110. Embedding Chamber
120. Heating element

### DETAILED DESCRIPTION OF THE FIGURE

Figure 1 represents an embodiment of the apparatus 5 of the invention for fixing and dehydrating a biological specimen 60 that comprises a processing chamber 50, fixative vapors such as formaldehyde vapors 40 (which preferably saturate the processing chamber 50) and means for physically removing water contained in said fixed biological specimen 60 by evaporation and/or sublimation. In the present Figure, the means are represented as a heater 70, however other means may be suitable too according to the present invention, e.g. the ones disclosed above.

The apparatus according to embodiments further comprises a first chamber 10, wherein fixative vapors such as formaldehyde vapors 40 are generated, e.g. starting from fixative vapor precursors as defined above (for example provided within a cartridge 100), thanks to the means for generating a flow of fixative vapors as above defined, e.g. a heating element 20 and/or a vacuum pump. Such formaldehyde vapors 40 will be then collected in the processing chamber 50, so that the biological sample 60 can be fixed according to step a') as disclosed above. After fixation, dehydration (step a) as disclosed above) will be accomplished by physical removal of water from the fixed tissue thanks to means for physically removing water, e.g. a ventilation, a heating and a vacuum systems that provides air flow, in synergy with a mild vacuum (about 800 mbar) and a temperature slightly higher than room temperature (max 35 °C) within the processing chamber 50. The water removed from the biological sample 60 according to the above is then removed from the processing chamber 50 via an outlet for a flow of fluids 90 (exhausted water connection piping) and is collected within a second chamber 80.

According to the present embodiment, an embedding chamber 110 is further comprised, in which infiltration with molten paraffin preferably occurs. For example, once the biological sample 60 is fixed and dehydrated as disclosed above, such sample (which may be arranged in bio-cassettes) can be automatically or manually displaced within the embedding chamber 110, where the infiltration with molten paraffin will take place, preferably with vacuum and pressure cycles as above disclosed. Advantageously, the embedding chamber does not need cleaning cycles to remove the residual reagents, because only paraffin (or other embedding media) will be loaded in. An illustrative use of embodiments of the apparatus 5 of the invention is the following: a mixture of formaldehyde and water (formaldehyde vapor precursors) contained in a fixative cartridge 100 is placed in a first chamber 10 by the operator through coupling the fixative cartridge 100 with the first chamber 10. The first chamber 10 is preferably sealed and can be loaded with such a mixture by means for coupling the fixative cartridge 100 to it, whereby the operator is not exposed to its content. Activation by plug (e.g. creating a vacuum in the first chamber 10 thanks to the means for generating a flow of said formaldehyde vapors) generates the formaldehyde vapors 40 from the formaldehyde vapor precursor. This first chamber 10 is in fluidic connection (via e.g. pipes 30) with the processing chamber 50 that contains the biological sample 60, for example loaded enclosed in a bio-cassette. The processing chamber 50 is preferably air-tight. Eventually, after some time the formaldehyde vapors 40 have been generated, the processing chamber 50 would become saturated with formaldehyde vapors 40 (which diffuse from the first chamber 10 to the processing chamber 50), ensuring tissue fixation. An appropriate pressure can be applied in the processing chamber 50 in order to increase the efficiency of the penetration of the formaldehyde vapors 40 into the biological sample 60. After the fixation, formaldehyde vapors 40 are unloaded from the processing chamber 50 by at least an outlet. Dehydration is then accomplished by physically removing water from the fixed biological sample 60 thanks to means for physically removing water. Therefore, according to present illustrative use, step b) as above disclosed advantageously starts after step a) as above disclosed is over. Once the water is removed from the biological sample 60, the latter (which can be arranged in a bio-cassette) can be automatically (or manually) displaced in the embedding chamber 110, wherein infiltration with the embedding medium occurs e.g. as above disclosed.

## Claims

1. A method for processing a biological specimen that comprises the following essential steps:
a') treating said biological specimen with fixative vapors, thus providing fixation of said biological specimen;
a) removing water contained in said fixed biological specimen by evaporation, thus providing a fixed and dehydrated biological specimen and
b) including said fixed and dehydrated biological specimen into an embedding medium,
**characterized in that** said fixative vapors of step a') are generated by means for generating a flow of fixative vapors starting from fixative vapor precursors, said flow of fixative vapors diffusing to the said biological specimen.

2. The method according to claim 1, **characterized in that** said fixative vapors are formaldehyde vapors.

3. The method according to claim 2, **characterized in that** said fixative vapors are moist formaldehyde vapors.

4. The method according to claim 3, **characterized in that** said moist formaldehyde vapors are generated by heating, and/or creating vacuum within a chamber containing, a concentrated formaldehyde solution and/or a mixture of formaldehyde and water.

5. The method according to any one of claims 1 to 4, **characterized in that** said step a') is carried out for a time comprised in the range of 1 to 6 hours.

6. The method according to any one of claims 1 to 5, **characterized in that** said evaporation is carried out by air-drying and/or by vacuum drying.

7. An apparatus (5) for processing a biological specimen (60) that comprises a first chamber (10) containing fixative vapor precursors and being configured to generate vapors (40), a processing chamber (50), means (70) for removing water contained in said biological specimen (60) by evaporation, means for loading and unloading an embedding medium and optionally an embedding chamber (110), the first chamber (10) being in fluidic connection with the processing chamber (50) and comprising means for generating a flow of fixative vapors (40) from said first chamber (10) to said processing chamber (50), said fixative vapors being generated to treat a biological sample, thus providing fixation of said biological sample.

8. The apparatus (5) according to claim 7, **characterized in that** the processing chamber is air-tight, ensuring efficient containing of fixative vapors.

9. The apparatus (5) according to claim 8, **characterized in that** said fixative vapors are formaldehyde vapors (40).

10. The apparatus (5) according to any one of claims 7 to 9, **characterized in that** said means for physically removing water are means for carrying out air-drying and/or vacuum drying.

11. The apparatus (5) according to any one of claims 7 to 10, **characterized in that** said processing chamber (50) further comprises at least an outlet for a flow of fluid (90) in fluidic connection with a second chamber (80), said second chamber being the exhausted water container whereby said water physically removed from said fixed biological specimen (60) is unloaded from said processing chamber (50) through said outlet (90) thanks to the presence of means that favors the unloading of said water from the processing chamber such as a cold trap or fans to generate an outgoing flow of fluid from the processing chamber (50).

## Patentansprüche

1. Verfahren zur Bearbeitung einer biologischen Probe, welches die folgenden wesentlichen Schritte aufweist:
a') Behandeln der biologische Probe mit Fixierdämpfen, wodurch eine Fixierung der biologischen Probe bereitgestellt wird;
a) Entfernen des in einer fixierten biologischen Probe enthaltenen Wassers durch Verdunstung, wodurch eine fixierte und dehydrierte biologische Probe bereitgestellt wird und
b) Einschließen der fixierten und dehydrierten biologischen Probe in ein Einbettungsmedium,
**dadurch gekennzeichnet, dass** die Fixierdämpfe von Schritt a') mit Mitteln zur Erzeugung eines Fixierdampfstromes erzeugt werden, ausgehend von Fixierdampfvorläufersubstanzen, wobei der Fixierdampfstrom zu der biologischen Probe diffundiert.

2. Verfahren nach Anspruch 1, **dadurch gekennzeichnet, dass** die Fixierdämpfe Formaldehyddämpfe sind.

3. Verfahren nach Anspruch 2, **dadurch gekennzeichnet, dass** die Fixierdämpfe feuchte Formaldehyddämpfe sind.

4. Verfahren nach Anspruch 3, **dadurch gekennzeichnet, dass** die feuchten Formaldehyddämpfe durch Erhitzen und/oder Erzeugen eines Vakuums in einer Kammer erzeugt werden, die eine konzentrierte Formaldehydlösung und/oder eine Mischung aus Formaldehyd und Wasser enthält.

5. Verfahren nach einem der Ansprüche 1 bis 4, **dadurch gekennzeichnet, dass** Schritt a') für einen Zeitraum im Bereich von 1 bis 6 Stunden durchgeführt wird.

6. Verfahren nach einem der Ansprüche 1 bis 5, **dadurch gekennzeichnet, dass** die Verdampfung durch Lufttrocknung und/oder Vakuumtrocknung erfolgt.

7. Vorrichtung (5) zur Bearbeitung einer biologischen Probe (60), die eine erste Kammer (10), die Fixierdampfvorläufersubstanzen enthält und die konfiguriert ist, Fixierdämpfe (40) zu erzeugen, eine Bearbeitungskammer (50), Mittel (70) zum Entfernen des in der biologischen Probe (60) enthaltenen Wassers durch Verdunstung, Mittel zum Be- und Entladen eines Einbettungsmediums und optional eine Einbettungskammer (110) aufweist, wobei die erste Kammer (10) in Fluidverbindung mit der Bearbeitungskammer (50) steht und Mittel zum Erzeugen eines Fixierdampfstroms (40) von der ersten Kammer (10) zur Bearbeitungskammer (50) umfasst, wobei die Fixierdämpfe erzeugt werden, um eine biologische Probe zu behandeln, wodurch eine Fixierung der biologischen Probe bereitgestellt wird.

8. Vorrichtung (5) nach Anspruch 7, **dadurch gekennzeichnet, dass** die Bearbeitungskammer luftdicht ist, wodurch sichergestellt ist, dass sie Fixierdämpfe effizient enthält.

9. Vorrichtung (5) nach Anspruch 8, **dadurch gekennzeichnet, dass** die Fixierdämpfe Formaldehyddämpfe (40) sind.

10. Vorrichtung (5) nach einem der Ansprüche 7 bis 9, **dadurch gekennzeichnet, dass** die Mittel zur physikalischen Entfernung von Wasser Mittel zur Durchführung von Lufttrocknung und/oder Vakuumtrocknung sind.

11. Vorrichtung (5) nach einem der Ansprüche 7 bis 10, **dadurch gekennzeichnet, dass** die Bearbeitungskammer (50) außerdem mindestens einen Auslass für einen Fluidstrom (90) in Fluidverbindung mit einer zweiten Kammer (80) aufweist, wobei die zweite Kammer der Wasserbehälter für das ausgetriebene Wasser ist, wodurch das physisch von der fixierten biologischen Probe (60) entfernte Wasser aus der Bearbeitungskammer (50) durch den Auslass (90) mit Hilfe der Anwesenheit von Mitteln, die die Entladung des Wassers aus der Bearbeitungskammer fördern, wie beispielsweise eine Kältefalle oder Ventilatoren zur Erzeugung eines Ausgangsstromes von Fluid aus der Bearbeitungskammer (50), entladen wird.

## Revendications

1. Procédé de traitement d'un échantillon biologique qui comprend les étapes essentielles suivantes consistant à :
a') traiter ledit échantillon biologique avec des vapeurs d'agent fixateur, ce qui permet de fixer ledit échantillon biologique ;
a) éliminer par évaporation l'eau contenue dans ledit échantillon biologique fixé, ce qui permet d'obtenir un échantillon biologique fixé et déshydraté, et
b) inclure ledit échantillon biologique fixé et déshydraté dans un milieu d'inclusion, **caractérisé en ce que** les vapeurs d'agent fixateur de l'étape a') sont générées par des moyens permettant de générer un flux de vapeurs d'agent fixateur à partir de précurseurs de vapeurs d'agent fixateur, ledit flux de vapeurs d'agent fixateur se diffusant vers ledit échantillon biologique.

2. Procédé selon la revendication 1, **caractérisé en ce que** les vapeurs d'agent fixateur sont des vapeurs de formaldéhyde.

3. Procédé selon la revendication 2, **caractérisé en ce que** les vapeurs d'agent fixateur sont des vapeurs de formaldéhyde humides.

4. Procédé selon la revendication 3, **caractérisé en ce que** les vapeurs de formaldéhyde humides sont générées en chauffant et/ou en créant un vide dans une chambre contenant une solution concentrée de formaldéhyde et/ou un mélange de formaldéhyde et d'eau.

5. Procédé selon l'une quelconque des revendications 1 à 4, **caractérisé en ce que** l'étape a') est effectuée pendant une durée comprise entre 1 et 6 heures.

6. Procédé selon l'une quelconque des revendications 1 à 5, **caractérisé en ce que** l'évaporation est effectuée par séchage à l'air et/ou par séchage sous vide.

7. Appareil (5) pour le traitement d'un échantillon biologique (60) qui comprend une première chambre (10) contenant des précurseurs de vapeurs d'agent fixateur et configurée pour générer des vapeurs d'agent fixateur (40),
une chambre de traitement (50), des moyens (70) pour éliminer l'eau contenu dans ledit échantillon biologique (60) par évaporation, des moyens de chargement et de déchargement d'un milieu d'inclusion et éventuellement une chambre d'inclusion (110), la première chambre (10) étant en connexion fluidique avec la chambre de traitement (50) et comprenant des moyens pour générer un flux de vapeurs d'agent fixateur (40) de ladite première chambre (10) à ladite chambre de traitement (50), lesdites vapeurs d'agent fixateur étant générées pour traiter un prélèvement biologique, assurant ainsi la fixation dudit prélèvement biologique.

8. Appareil (5) selon la revendication 7, **caractérisé en ce que** la chambre de traitement est étanche à l'air, ce qui garantit un confinement efficace des vapeurs d'agent fixateur.

9. Appareil (5) selon la revendication 8, **caractérisé en ce que** lesdites vapeurs d'agent fixateur sont des vapeurs de formaldéhyde (40).

10. Appareil (5) selon l'une quelconque des revendications 7 à 9, **caractérisé en ce que** lesdits moyens d'élimination physique de l'eau sont des moyens permettant d'effectuer un séchage à l'air et/ou sous vide.

11. Appareil (5) selon l'une quelconque des revendications 7 à 10, **caractérisé en ce que** ladite chambre de traitement (50) comprend en outre au moins une sortie pour un écoulement de fluide (90) en connexion fluidique avec une seconde chambre (80), ladite seconde chambre est le récipient d'eau épuisée par lequel ladite eau physiquement retirée dudit échantillon biologique fixe (60) est déchargée de ladite chambre de traitement (50) par ladite sortie (90) grâce à la présence de moyens qui favorisent le déchargement de ladite eau de la chambre de traitement, tels qu'un piège à froid ou des ventilateurs pour générer un flux de fluide sortant de la chambre de traitement (50).
